# EUROPÄISCHE PATENTSCHRIFT

(11) **EP 4 201 533 B1**
(45) Veröffentlichungstag und Bekanntmachung des Hinweises auf die Patenterteilung: **15.07.2026**
(21) Anmeldenummer: 22209385.8
(22) Anmeldetag: 24.11.2022
(51) Int. Cl.: B05B 12/12

(54) **SPRÜHEINRICHTUNG FÜR EINEN WERKSTÜCKWECHSLER SOWIE WERKSTÜCKWECHSLER UND VERFAHREN ZUM HANDHABEN VON PLATTENFÖRMIGEN WERKSTÜCKEN**
SPRAY DEVICE FOR A WORKPIECE CHANGER, WORKPIECE CHANGER, AND METHOD FOR HANDLING PLATE-SHAPED WORKPIECES
DISPOSITIF DE PULVÉRISATION POUR UN CHANGEUR DE PIÈCES À USINER AINSI QUE CHANGEUR DE PIÈCES À USINER ET PROCÉDÉ DE MANIPULATION DE PIÈCES À USINER EN FORME DE PLAQUES

(30) Priorität: 14.12.2021 DE 102021132899
(43) Veröffentlichungstag der Anmeldung: 28.06.2023
(73) Patentinhaber: TRUMPF Sachsen SE, 01904 Neukirch/Lausitz (DE)
(72) Erfinder: Gruhl, Norbert, 02627 Hochkirch (DE); Weser, Paul, 02763 Zittau (DE); Martin, Jens, 01844 Neustadt / Sachsen (DE)
(74) Vertreter: Trumpf Patentabteilung

(56) Entgegenhaltungen:
- EP-B1- 2 897 740
- EP-B1- 3 178 605
- DE-U1- 29 980 210

## Beschreibung

Die Erfindung betrifft eine Sprüheinrichtung für einen Werkstückwechsler sowie einen Werkstückwechsler und ein Verfahren zum Handhaben von plattenförmigen Werkstücken.

Aus der DE 10 2012 207 818 A1 ist ein Verfahren und eine Vorrichtung zum Trennen von plattenförmigen Werkstücken in einer Bearbeitungsmaschine bekannt. Eine solche Bearbeitungsmaschine kann beispielsweise als Laserschneidmaschine ausgebildet sein, durch welche plattenförmige Werkstücke, insbesondere Bleche, in Werkstückteile bzw. Fertigteile und ggf. ein oder mehrere verbleibende Restgitter geschnitten werden. Zum Be- und Entladen der Bearbeitungsmaschine ist ein Palettenwechsler vorgesehen. Dieser Palettenwechsler umfasst ein Grundgestell, innerhalb dem eine Rüstposition für zumindest eine zwischen dem Palettenwechsler und der Bearbeitungsmaschine verfahrbare Palette vorgesehen ist. Benachbart zur Rüstposition ist dem Palettenwechsler eine Be- und Entladestation zugeordnet. Eine Handlingseinrichtung des Werkstückwechslers greift in der Beladestation ein plattenförmiges Werkstück und führt dieses in die Rüstposition über, so dass die Handlingseinrichtung das plattenförmige Werkstück auf der Palette ablegen kann. Danach wird die Palette in die Bearbeitungsmaschine zur Bearbeitung des plattenförmigen Werkstücks eingefahren.

Die Palette weist eine Auflagefläche mit Auflageleisten auf, welche Auflagespitzen umfasst. Beim Laserschneiden des plattenförmigen Werkstückes kann die Schneidkontur über die Spitzen der Auflageleisten verlaufen. In solchen Fällen kommt es zur Ablenkung des Schneidstrahls. Dadurch gelangt geschmolzenes Material auf die Unterseite des plattenförmigen Werkstücks nahe der Schneidkontur und haftet dort an. Ein solches am Werkstück anhaftendes Material muss zu einem späteren Zeitpunkt aufwändig entfernt werden. Das Anhaften von aufgeschmolzenem Material kann grundsätzlich verringert werden, sofern ein Trennmittel auf dem plattenförmigen Werkstück vorgesehen ist. Sofern jedoch ein unbearbeitetes plattenförmiges Material mit einem solchen Trennmittel benetzt ist, kann eine Handhabung mit einer Handlingseinrichtung, insbesondere mit Sauggreifelementen, nicht erfolgen, da das Trennmittel ein Anhaften verhindert.

Aus der DE 299 80 210 U1 ist eine Vorrichtung zum schablonenlosen Bemustern von flächigen Substrate bekannt. An einer Unterseite eines Farbspritzkopfes sind eine Vielzahl von Düsen feststehend vorgesehen. Der Farbspritzkopf kann von einer Rüststation entlang von horizontal ausgerichteten Führungsschienen in eine Druckstation verfahren werden. Im Anschluss daran werden über die Düsen von oben auf das Substrat ein Druckmedium aufgebracht.

Aus der EP 2 897 740 B1 ist ein Beschichtungsgestell bekannt, welches stehend angeordnet ist. An einer oberen Führung hängend werden Stäbe durch eine Beschichtungsstation hindurchgeführt. In der Beschichtungsstation sind Sprühdüsen horizontal ausgerichtet, um die Stäbe zu beschichten.

Der Erfindung liegt deshalb die Aufgabe zugrunde, eine Sprüheinrichtung für einen Werkstückwechsler sowie einen Werkstückwechsler als auch ein Verfahren zum Be- und Entladen einer Palette mit einem plattenförmigen Werkstück in einem Palettenwechsler vorzuschlagen, wodurch ein Anhaften von aufgeschmolzenem Material während des Laserschneidens benachbart zur Schneidkontur an dem plattenförmigen Werkstück zumindest verringert wird.

Diese Aufgabe wird durch eine Sprüheinrichtung zum Auftragen von einem Trennmittel auf ein plattenförmiges Werkstück gelöst, welches eine Tragstruktur umfasst, an der ein leistenförmiger Grundkörper vorgesehen ist, entlang dessen Längsachse mehrere Sprühköpfe mit zumindest einer Auslassöffnung mit Abstand zueinander ausgerichtet und angeordnet sind, die an zumindest einer Förderleitung zum Zuführen eines Trennmittels und zur Ausgabe des Trennmittels durch die Sprühköpfe angeschlossen sind, wobei die Sprühköpfe in vertikaler Richtung an dem leistenförmigen Grundkörper nach oben weisend zueinander ausgerichtet sind, durch welche ein streifen- oder linienförmiger Auftrag des Trennmittels von unten nach oben in vertikaler Richtung gesehen auf eine Unterseite des plattenförmigen Werkstücks vorgesehen ist. Durch diese Sprüheinrichtung wird ermöglicht, dass zum einen die Oberseite des plattenförmigen Werkstücks nicht mit einem Trennmittel benetzt wird, so dass ein nicht mit Trennmittel benetztes plattenförmiges Werkstück oder Rohmaterial bereitgestellt und mittels einer Handlingseinrichtung, insbesondere Sauggreifer, ergriffen und verfahren werden kann. Zum anderen wird ermöglicht, dass gezielt auf die Unterseite des plattenförmigen Werkstücks ein Auftrag von Trennmittel ermöglicht wird, um beim nachfolgenden Bearbeiten durch Laserschneiden in der Bearbeitungsmaschine ein gegebenenfalls Anhaften von aufgeschmolzenem Material auf der Unterseite des bearbeiteten plattenförmigen Werkstücks zu reduzieren oder zu vermeiden.

Bevorzugt ist vorgesehen, dass der leistenförmige Grundkörper durch eine Hubbewegung relativ zur Tragstruktur zwischen einer unteren Ruheposition und einer oberen Arbeitsposition in vertikaler Richtung auf- und abbewegbar ist. Dadurch wird ermöglicht, dass die Sprühköpfe für das Auftragen des Trennmittels auf die Unterseite des plattenförmigen Werkstückes relativ nah an die Unterseite des zumindest einen vorbeigeführten plattenförmigen Werkstücks für einen gleichmäßigen Auftrag herangeführt werden können. Während einer Verfahrbewegung einer Handlingseinrichtung in dem Werkstückwechsler von der Rüstposition in eine Be- und Entladeposition ist aufgrund der Anordnung des leistenförmigen Grundkörpers in der unteren Ruheposition ein kollisionsfreies Überfahren der Sprüheinrichtung ermöglicht.

Vorteilhafterweise umfasst die Sprüheinrichtung an dem leistenförmigen Grundkörper zumindest eine Schutzleiste, welche sich zumindest abschnittsweise, vorzugsweise vollständig, entlang des leistenförmigen Grundkörpers erstreckt, und die zumindest eine Schutzleiste ist in einer Ruheposition des leistenförmigen Grundkörpers in einer Schutzposition vorgesehen, durch welche die Sprühköpfe überdeckt sind, und in einer Arbeitsposition des leistenförmigen Grundkörpers ist die zumindest eine Schutzleiste in einer Arbeitsposition vorgesehen, welche die Sprühköpfe freigibt. Dadurch kann ein Verschmutzen der Sprühköpfe verhindert werden. Insbesondere beim Abführen von bearbeiteten plattenförmigen Werkstücken aus der Rüstposition in die Entladeposition erfolgt ein Überfahren der Sprüheinrichtung. Dabei herunterfallende Teile können durch die Schutzleisten die Sprühköpfe nicht verschmutzen oder die Auslassöffnungen verstopfen.

Bevorzugt ist vorgesehen, dass die zumindest eine Schutzleiste durch eine Schwenk-, Schiebe- und/oder Verfahrbewegung durch eine mechanische, elektrische, hydraulische, pneumatische oder linearmotorische Steuerungseinrichtung in die Schutzposition und Arbeitsposition überführbar ist.

Vorteilhafterweise ist eine mechanische Steuerungseinrichtung zwischen der Tragstruktur und dem leistenförmigen Grundkörper vorgesehen, wobei die Tragstruktur zumindest ein Steuerelement aufweist, welches mit einem an dem leistenförmigen Grundkörper angeordneten Ansteuerelement gekoppelt ist. Dadurch kann beispielsweise durch die Ansteuerung der Hubbewegung des leistenförmigen Grundkörpers gleichzeitig bzw. eine zwangsweise Ansteuerung der zumindest einen Schutzleiste vorgesehen sein. Dadurch wird der Aufbau der Sprüheinrichtung vereinfacht.

Diese mechanische Steuereinrichtung kann als mechanisches Steuerelement eine Kurvenscheibe und als Ansteuerelement ein in die Kurvenscheibe eingreifender Nocken sein, wobei dieser Nocken an dem leistenförmigen Grundkörper befestigt ist.

Gemäß einer bevorzugten Ausführungsform der Sprüheinrichtung ist vorgesehen, dass beidseitig zu den entlang oder in der Längsachse des leistenförmigen Grundkörpers angeordneten Sprühköpfen jeweils zumindest eine Schutzleiste vorgesehen ist, wobei die beidseitig zu den Sprühköpfen angeordneten Schutzleisten in entgegengesetzte Richtung aus der Schutzposition in die Arbeitsposition überführbar sind. Die Schutzleisten sind bevorzugt an einer Oberseite des leistenförmigen Grundkörpers positioniert. Dies ermöglicht beispielsweise, dass bei einer Absenkbewegung des leistenförmigen Grundkörpers die Schutzleisten aus der Arbeitsposition durch ein aufeinander Zuschwenken in eine Ruheposition übergeführt werden, bei der diese Schutzleisten oberhalb der Sprühdüsen in Form eines schützenden Daches für die darunterliegenden Sprühdüsen positioniert werden können.

Vorteilhafterweise sind die Schutzleisten als eine Bürstenleiste ausgebildet. Dies weist den Vorteil auf, dass die Stirnseite einer solchen Bürstenleiste, welche durch die freien Borstenenden gebildet ist, in einer Arbeitsposition an der Unterseite des plattenförmigen Werkstücks angreifen kann. Bevorzugt kann dabei ein geschlossener Sprühraum zum Auftragen des Trennmittels ermöglicht werden. Somit kann der Sprühraum zumindest in der Verfahrrichtung des plattenförmigen Werkstücks quer zur Längserstreckung der Sprüheinrichtung abgeschirmt sein. Des Weiteren weist die Schutzleiste als Bürstenleiste den Vorteil auf, dass beim Überfahren des plattenförmigen Werkstücks die Bürstenleiste an der Unterseite des plattenförmigen Werkstücks einen gleichmäßigen Film aus dem aufgetragenen Trennmittel ausbilden kann.

An dem leistenförmigen Grundkörper sind vorteilhafterweise mehrere im Abstand zueinander angeordnete Sensoren, insbesondere Tastsensoren, vorgesehen, durch welche eine Breite des plattenförmigen Werkstücks erfassbar ist. Dadurch können in einfacher Weise unterschiedlich breite plattenförmige Werkstücke über die Sprüheinrichtung geführt werden, wobei aufgrund der durch die Sensoren erfassten Breite des plattenförmigen Werkstückes nur die für diese Breite zugeordneten Sprühköpfe zur Ausgabe des Trennmittels ansteuerbar sind. Dies ermöglicht eine zielgerichtete Ausgabe des Trennmittels ohne Vernebelung der Umgebung.

Des Weiteren ist bevorzugt vorgesehen, dass an jedem Sprühkopf ein Abschaltventil vorgesehen ist, welches jeweils einzeln ansteuerbar ist. Diese Abschaltventile werden in Abhängigkeit der erfassten Breite zur Ausgabe des Trennmittels durch den jeweiligen Sprühkopf angesteuert.

Zur Ansteuerung der Hubbewegung des leistenförmigen Grundkörpers relativ zur Tragstruktur sind zumindest zwei Stellantriebe vorgesehen, um den leistenförmigen Grundkörper zwischen der Ruheposition und der Arbeitsposition zu verfahren.

Des Weiteren ist bevorzugt vorgesehen, dass der leistenförmige Grundkörper wannenförmig ausgebildet ist. Dabei kann im Boden der Wanne entlang der Längsachse des leistenförmigen Grundkörpers eine längere Ausnehmung vorgesehen sein oder mehrere Bohrungen, in denen die Sprühköpfe positioniert werden. Seitlich benachbart dazu im Übergangsbereich zu einem Wannenrand können die Schutzleisten angeordnet sein. In einem seitlich oberen Randbereich der Wanne können die Abfragesensoren zur Erfassung der Breite des plattenförmigen Werkstückes positioniert werden.

Zur gesamten Ansteuerung der Sprüheinrichtung kann eine Steuerungseinrichtung oder eine Datenverarbeitungsvorrichtung vorgesehen sein, um die einzelnen Motoren, Sensoren und dergleichen anzusteuern.

Die der Erfindung zugrundeliegende Aufgabe wird des Weiteren durch einen Palettenwechsler zum Be- und Entladen einer Bearbeitungsmaschine gelöst, welcher zumindest eine Palette mit einer Auflagefläche zur Aufnahme eines plattenförmigen Werkstücks umfasst sowie ein Grundgestell mit der zumindest einen in dem Grundgestell anordenbaren Palette in einer Rüstposition, wobei die Palette zwischen der Rüstposition in dem Grundgestell und einer Bearbeitungsposition in der Bearbeitungsmaschine verfahrbar ist und mit einer Handlingseinrichtung, welche zwischen einer in oder benachbart zum Grundgestell vorgesehenen Beladestation und der Rüstposition verfahrbar ist, wobei die Handlingseinrichtung aus der Beladeposition zumindest ein plattenförmiges Werkstück entnimmt und nach dem Verfahren in die Rüstposition auf der Auflagefläche der Palette positioniert, wobei zwischen der Beladeposition und der Rüstposition eine Sprüheinrichtung zum Auftragen von Trennmittel auf eine Unterseite des zumindest einen plattenförmigen Werkstücks beim Überführen des plattenförmigen Werkstücks aus der Beladeposition in die Rüstposition vorgesehen ist. Durch diese Anordnung der Sprüheinrichtung in dem Werkstückwechsler, insbesondere zwischen der Beladeposition und der Rüstposition, kann während einer Verfahrbewegung der Handlingseinrichtung gleichzeitig ein Auftrag von Trennmittel auf die Unterseite des plattenförmigen Werkstücks erfolgen. Dennoch ist aufgrund des nicht Vorhandenseins von Trennmittel auf der Oberseite des plattenförmigen Werkstücks ein gesichertes Greifen des plattenförmigen Werkstücks mit der Handlingseinrichtung ermöglicht.

Vorteilhafterweise ist vorgesehen, dass die Handlingseinrichtung Sauggreifelemente aufweist, die an einer Oberseite des plattenförmigen Werkstücks angreifen und das plattenförmige Werkstück frei nach unten hängend oberhalb der Sprüheinrichtung verfahrbar ist. Dadurch kann die gesamte Unterseite des plattenförmigen Werkstücks, welches auf der Auflagefläche der Palette während der Bearbeitung in der Bearbeitungsmaschine aufliegt, mit Trennmittel versehen werden.

Die der Erfindung zugrundeliegende Aufgabe wird des Weiteren durch ein Verfahren zum Handhaben von plattenförmigen Werkstücken in einem Palettenwechsler gelöst, wobei der Palettenwechsler zumindest eine Palette mit einer Auflagefläche zur Aufnahme des plattenförmigen Werkstücks umfasst, die in einer Rüstposition in einem Grundgestell anordenbar ist und von dieser aus in eine Bearbeitungsposition in die Bearbeitungsmaschine verfahrbar ist und eine Handlingseinrichtung umfasst, welche zwischen einer in oder benachbart zum Grundgestell vorgesehenen Beladestation und der Rüststation verfahrbar ist, wobei die Handlingseinrichtung aus der Beladeposition zumindest ein plattenförmiges Werkstück entnimmt und in die Rüstposition zur Auflage des plattenförmigen Werkstücks auf der Auflagefläche der Palette überführt, wobei während einer Verfahrbewegung der Handlingseinrichtung mit dem zumindest einen plattenförmigen Werkstück von der Beladestation in die Rüststation eine zwischen der Beladestation und der Rüststation vorgesehene Sprüheinrichtung überfahren wird und während dem Überfahren durch die Sprüheinrichtung ein Trennmittel auf eine Unterseite des zumindest einen plattenförmigen Werkstücks aufgetragen wird. Dadurch kann das Auftragen von Trennmittel in einem automatisierten Beladezyklus eines solchen Werkstückwechslers integriert werden, ohne dass zusätzliche Handhabungsschritte erforderlich sind. Auch kann eine einfache Nachrüstung einer solchen Sprüheinrichtung in einem Werkstückwechsler vorgesehen sein.

Bevorzugt ist vorgesehen, dass nach dem Greifen des plattenförmigen Werkstücks durch die Handlingseinrichtung diese in Richtung auf die Rüstposition verfahren wird und durch zumindest einen Sensor in Verfahrrichtung vor der Sprüheinrichtung eine vorauseilende Kante des plattenförmigen Werkstücks erfasst wird und daraufhin die Verfahrbewegung der Handlingseinrichtung gestoppt und die Sprüheinrichtung aus einer Ruheposition in eine Arbeitsposition in vertikaler Richtung verfahren wird. Durch diesen zumindest einen Sensor, insbesondere Abfragesensor, wird somit die Sprüheinrichtung aktiviert und in eine Arbeitsposition für ein darauffolgendes Auftragen des Trennmittels die Unterseite des plattenförmigen Werkstücks übergeführt.

Darauffolgend ist bevorzugt vorgesehen, dass die Verfahrbewegung der Handlingseinrichtung in Richtung auf die Rüstposition erfolgt und durch die an dem leistenförmigen Grundkörper angeordneten Sensoren eine Breite des plattenförmigen Werkstücks erfasst wird. Ausgehend von der Anzahl der betätigten Sensoren bzw. der erfassten Breite des plattenförmigen Werkstücks wird daraufhin die entsprechende Anzahl der an dem leistenförmigen Grundkörper vorgesehenen Sprühköpfe zur Ausgabe von Trennmittel angesteuert. Die Handlingseinrichtung setzt die Verfahrbewegung in Richtung auf die Rüstposition fort, wodurch die Unterseite des plattenförmigen Werkstückes über die Sprühköpfe hinwegbewegt und ein streifen- oder linienförmiger Auftrag von Trennmittel auf die Unterseite des plattenförmigen Werkstücks erzeugt wird. Insbesondere ist dabei vorgesehen, dass die Unterseite des plattenförmigen Werkstücks auf den Stirnseiten der Schutzleiste der Sprüheinrichtung anliegt, so dass ein gleichmäßiges Verteilen des Trennmittels ermöglicht wird. Gleichzeitig kann eine Abschirmung des Sprühraumes gegeben sein.

Insbesondere ist darauffolgend vorgesehen, dass durch den zumindest einen Sensor, der in Verfahrrichtung der Handlingseinrichtung in die Rüststation gesehen vor der Sprüheinrichtung liegt, das Ende des plattenförmigen Werkstücks erfasst und daraufhin die Sprühköpfe abgeschalten werden und zeitverzögert, insbesondere nachdem das plattenförmige Werkstück die Sprüheinrichtung vollständig überfahren und verlassen hat, der leistenförmige Grundkörper mit den Sprühköpfen in die Ruheposition abgesenkt wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Bearbeitungsmaschine mit einem Werkstückwechsler,
- Figur 2: eine schematisch vergrößerte Ansicht des Werkstückwechslers gemäß Figur 1,
- Figur 3: eine perspektivische Ansicht einer Sprüheinrichtung in einer Ruheposition,
- Figur 4: eine schematische Schnittansicht der Sprüheinrichtung entlang der Linie III-III in Figur 3,
- Figur 5: eine perspektivische Ansicht der Sprüheinrichtung in einer Arbeitsposition, und
- Figur 6: eine schematische Schnittansicht der Sprüheinrichtung entlang der Linie V-V in Figur 5.

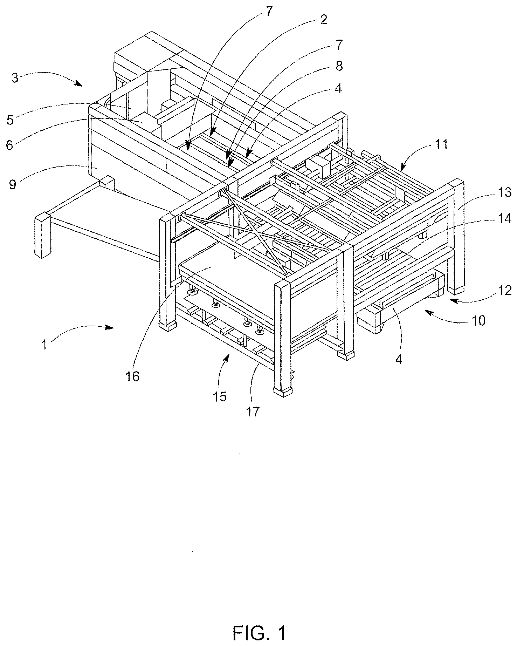

In Figur 1 ist eine Bearbeitungsanlage 1 zum Bearbeiten von plattenförmigen Werkstücken, insbesondere Blechen, dargestellt. Diese Bearbeitungsanlage 1 umfasst eine Bearbeitungsmaschine 3, welche beispielsweise als eine Laserschneidmaschine ausgebildet ist. Diese Laserschneidmaschine dient zur schneidenden Bearbeitung der plattenförmigen Werkstücke 2. Auf einer Palette 4 wird ein plattenförmiges Werkstück 2 aufliegend und im Inneren eines Arbeitsbereiches 5 der Bearbeitungsmaschine 3 angeordnet. Über einen Laserschneidkopf 6 wird ein Laserstrahl auf das plattenförmige Werkstück 2 gerichtet und die schneidende Bearbeitung durch eine Verfahrbewegung des Laserschneidkopfs 6 durchgeführt. Dabei wird das plattenförmige Werkstück 2 in ein oder mehrere Fertigteile 7 bzw. Werkstückteile geschnitten. Dabei können ein oder mehrere das Werkstückteil umgebende Restgitter 8 oder Restwerkstücke entstehen. Der Arbeitsbereich 5 der Bearbeitungsmaschine 3 ist durch eine Umhausung 9 gegenüber der Umgebung abgeschirmt. An die Umhausung 9 der Bearbeitungsmaschine 3 angrenzend ist ein Werkstückwechsler 10 positioniert. Dieser Wechsler 10 umfasst ein Grundgestell 13. Die Palette 4 ist innerhalb des Grundgestells 13 in einer Rüstposition 12 angeordnet. Die Palette 4 kann nach dem Beladen mit einem plattenförmigen Werkstück 2, welches auf einer Auflage 14 der Palette 4 aufliegt, durch eine Öffnung in der Umhausung 9 in den Arbeitsbereich 5 hinein und nach der Bearbeitung auch wieder herausgeführt werden.

Das Grundgestell 13 des Werkstückwechslers 10 nimmt des Weiteren eine Handlingseinrichtung 11 auf. Diese Handlingseinrichtung 11 kann zwischen der Rüstposition 12 und einer Beladeposition 15 verfahrbar sein. Diese Beladeposition 15 kann gleichzeitig auch einer Entladeposition entsprechen. Diese Be- und Entladeposition 15 kann innerhalb des Grundgestells 13 sein. Diese Be- und Entladeposition 15 kann auch getrennt dazu ausgebildet sein. Beispielsweise ist in einem unteren Bereich der Be- und Entladeposition eine Palette 17 positioniert, auf welchem plattenförmige Werkstücke 2, insbesondere ein Rohmaterial oder vorbearbeitete plattenförmige Werkstücke 2, bereitgestellt werden. Oberhalb dieser vorbeschriebenen Beladeposition ist die Entladeposition als Auflagefläche oder Ablagefläche 16 dargestellt. Fertigteile 7 und/oder Restgitter 8 können darauf abgelegt bzw. über die nachfolgende beispielhafte Rutsche abgeführt werden.

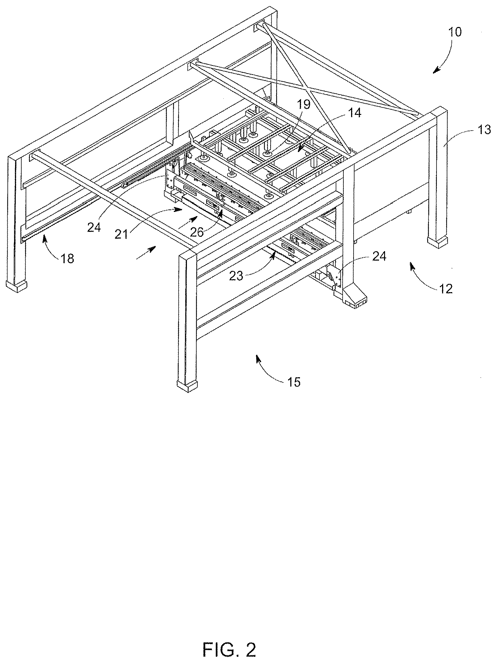

In Figur 2 ist der Werkstückwechsler 10 vergrößert dargestellt. Die Handlingseinrichtung 11 ist bevorzugt entlang einer Linearachse 18, insbesondere horizontal, verfahrbar, so dass ein einfacher Wechsel zwischen der Rüstposition 12 und zumindest der Beladeposition 15 ermöglicht ist. Die Handlingseinrichtung 11 ist bevorzugt als eine Sauggreifeinrichtung mit mehreren Sauggreifelementen 19 ausgebildet. Diese Sauggreifelemente 19 können einzeln in Abhängigkeit des Formats bzw. der Größe des zu handhabenden plattenförmigen Werkstücks 2 angesteuert bzw. mit Vakuum beaufschlagt werden.

Zwischen der Rüstposition 12, in welcher die Palette 10 positionierbar ist, und einer Be- und Entladeposition 15, in der beispielsweise eine weitere Palette mit Rohmaterial anordenbar sein kann, ist eine Sprüheinrichtung 21 vorgesehen. Die Sprüheinrichtung 21 ist unterhalb des Arbeitsraumes der verfahrbaren Handlingseinrichtung 11 in dem Grundgestell 13 positioniert. Diese Sprüheinrichtung 21 dient zum Auftragen von einem Trennmittel auf einer Unterseite des plattenförmigen Werkstücks 2, welches für eine Bearbeitung zur Auflage auf die Palette 4 übergeführt wird. Darauffolgend wird die Palette 4 mit dem auf der Unterseite mit Trennmittel versehenen plattenförmigen Werkstück 2 in die Bearbeitungsmaschine 3 zur Bearbeitung eingefahren.

Die Sprüheinrichtung 21 umfasst eine Tragstruktur 23. Am jeweiligen Ende der Tragstruktur 23 sind Befestigungsabschnitte 24 vorgesehen, durch welche die Sprüheinrichtung 21 zwischen der Beladestation 15 und der Rüststation 12 an oder in dem Grundgestell 13 befestigbar ist. Die Anordnung der Sprüheinrichtung 21 kann auch in bereits bestehende bzw. sich in Betrieb befindliche Werkstückwechsler 10 nachgerüstet werden. Dafür eignet sich insbesondere die Anordnung der Position zwischen der Rüstposition 12 und der Be- und Entladeposition 15.

An der Tragstruktur 23 der Sprüheinrichtung 21 ist zumindest ein Abfragesensor 26 vorgesehen. Dieser Abfragesensor 26 erfasst eine vorauseilende Kante des plattenförmigen Werkstücks 2, sofern dieses mit der Handlingseinrichtung 11 aus der Be- und Entladestation 15 in Richtung auf die Rüststation 12 verfahren wird.

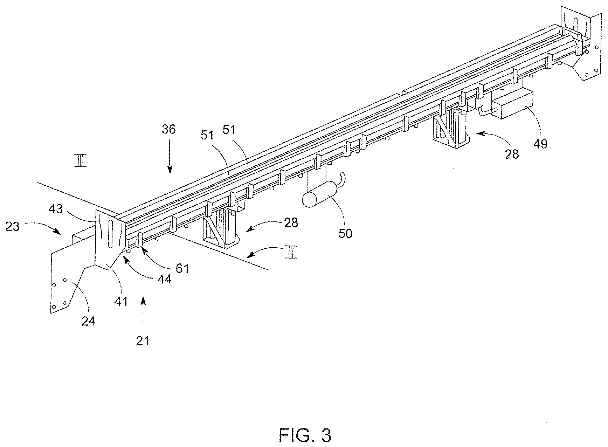

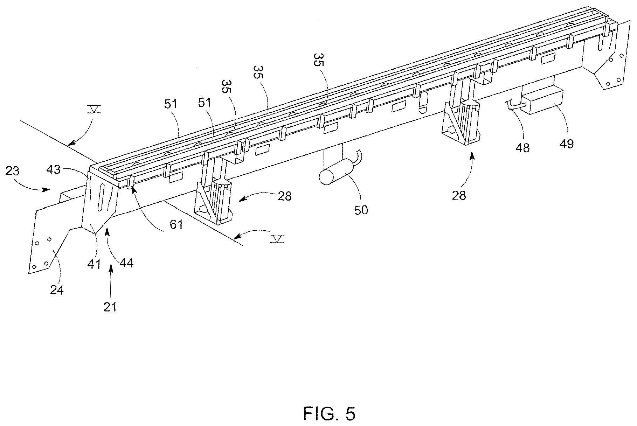

In Figur 3 ist eine perspektivische Ansicht der Sprüheinrichtung 21 dargestellt. An der Tragstruktur 23 sind zumindest zwei Stellantriebe 28 befestigt. Diese Stellantriebe 28 können als Linearantriebe, als pneumatische Antriebe, als elektrische Antriebe oder sonstige Antriebe ausgebildet sein. Durch diese Stellantriebe 28 wird eine Hubbewegung eines leistenförmigen Grundkörpers 31 der Sprüheinrichtung 21 relativ zur Tragstruktur 23 angesteuert. Durch diese Hubbewegung werden an dem leistenförmigen Grundkörper 31 angeordnete Sprühköpfe 35 zur Ausgabe von einem Trennmittel auf dem plattenförmigen Werkstück 2 aus einer Ruheposition 36 gemäß Figur 3 in eine Arbeitsposition 37 gemäß Figur 5 übergeführt.

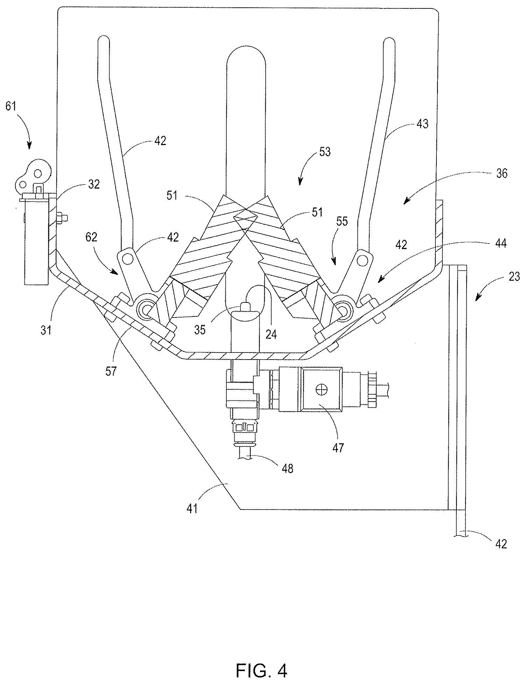

Die Figur 4 zeigt eine schematische Schnittansicht der Sprüheinrichtung 21 entlang der Linie III-III gemäß Figur 3. Daraus ist die Ruheposition 36 der Sprühköpfe 35 zu erkennen.

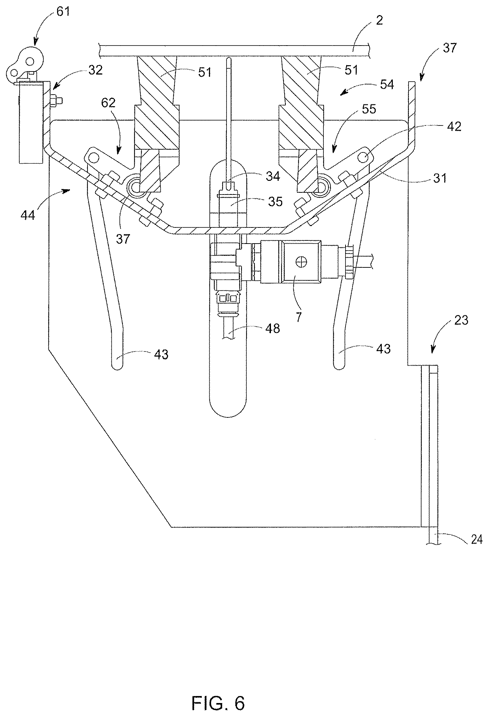

Der leistenförmige Grundkörper 31 ist bevorzugt als eine Wanne ausgebildet. Dieser leistenförmige Grundkörper 31 erstreckt sich zwischen stirnseitig an der Tragstruktur 23 vorgesehenen Steuerelementen 41, die mit Ansteuerelementen 42 (Figur 4) gekoppelt sind. Diese Steuerelemente 41 sind als eine sogenannte Kurvenbahn ausgebildet und weisen jeweils zwei spiegelbildlich zueinander angeordnete Längsschlitze 43 mit einem Kurvenverlauf auf. Die Ansteuerelemente 42 sind beispielsweise als Stifte oder Nocken ausgebildet, die in diesen Längsschlitzen 43 geführt sind. Das Steuerelemente 41 und Ansteuerelement 42 bilden eine mechanische Steuerungseinrichtung 44, durch welche eine zwangsweise Überführung der Schutzleisten 51 aus der Ruheposition 36 in die Arbeitsposition 37 (Figur 6) ermöglicht ist.

Entlang der Längsachse des leistenförmigen Grundkörpers 31 sind bevorzugt mehrere Sprühköpfe 35 im Abstand zueinander angeordnet. Das Rastermaß kann beliebig gewählt werden. Das Rastermaß ist bevorzugt von beispielsweise 250 mm vorgesehen. Damit kann variabel auf verschiedene Werkstückbreiten eingegangen werden. Jedem Sprühkopf 35 ist ein Abschaltventil 47 zugeordnet. Die Sprühköpfe 35 sind mit einer oder mehreren Förderleitungen 48 verbunden, die aus einem Vorratsbehälter 49 Trennmittel den Sprühköpfen 35 zuführen. Zur Ausgabe von Trennmittel über die Sprühköpfe 35 steht zumindest eine Förderleitung 48 mit einer Pumpe 50, insbesondere Doppelmembranpumpe, in Verbindung.

Dieser leistenförmige Grundkörper 31 nimmt zumindest eine, vorzugsweise zwei, Schutzleisten 51 auf. Diese Schutzleisten 51 sind bevorzugt als Borstenleiste ausgebildet. Diese Schutzleisten 51 erstrecken sich vorzugsweise über die gesamte Länge des leistenförmigen Grundkörpers 31. Vorzugsweise erstrecken sich diese, vorzugsweise vollständig, zwischen den Steuerelementen 41. Die Schutzleisten 51 nehmen in einer Ruheposition 36 der Sprüheinrichtung 21 eine Schutzposition 53 ein. In einer Arbeitsposition 37 der Sprüheinrichtung 31 nehmen die Schutzleisten 51 eine Arbeitsposition 54 ein, welche in den Figuren 5 und 6 dargestellt ist.

Bevorzugt sind die Schutzleisten 51 durch einen Hebelmechanismus 55 ansteuerbar. Das Ansteuerelement 42 ist an einem Hebelarm 62 und die Schutzleiste 51 an dem gegenüberliegenden Hebelarm 62 befestigt. Dazwischenliegend ist der Hebelarm 62 um eine Achse 57 schwenkbar, welche parallel zur Längsachse des leistenförmigen Grundkörper 31 ausgerichtet sind und an der Längsachse des leistenförmigen Grundkörpers 31 erstrecken sich auch die Sprühköpfe 35 im Abstand hintereinander.

Die Schutzleisten 51 sind in der Schutzposition 53 aufeinander zu gerichtet und liegen aneinander an oder greifen zumindest teilweise ineinander ein. Insbesondere bei den als Bürstenleiste ausgebildete Schutzleisten 51 greifen die Borstenenden ineinander ein, um eine vollständige Abschirmung der vertikal nach oben ausgerichteten Auslassöffnung 34 der Sprühköpfe 35 zu bilden. Dadurch wird quasi ein Dach über den Sprühköpfen 35 gebildet, um die Sprühköpfe 35 vor herabfallenden Teilen während einer Verfahrbewegung der Handlingseinrichtung 11 beim Entladen der Palette 4 innerhalb des Werkstückwechslers 10 zu schützen.

An einem stirnseitigen Ende 32 des leistenförmigen Grundkörpers 31, welcher zur Rüstposition 12 ausgerichtet ist, sind mehrere im Abstand zueinander angeordnete Sensoren 61, insbesondere Tastsensoren, vorgesehen. Diese Tastsensoren können beispielsweise auf Lücke zu den im Abstand ausgerichteten Sprühköpfen 35 anordenbar sein. Ein Schaltpunkt dieser Sensoren 61 liegt bevorzugt in einer Auflageebene, welche durch die Stirnseite der Schutzleisten 51 in der Arbeitsposition 54 gebildet ist.

Beim Überführen der Sprüheinrichtung 21 aus der Ruheposition 36 gemäß Figur 4 in die Arbeitsposition 37 gemäß Figur 6 wird der leistenförmige Grundkörper 31 durch eine Hubbewegung relativ zur Tragstruktur 23 in vertikaler Richtung nach oben bewegt. Durch die Steuerelemente 41 wird zwangsweise eine Schwenkbewegung die Schutzleisten 51 über den Hebelmechanismus 55 angesteuert. Die Schutzleisten 51 werden aus der Schutzposition 53 in die Arbeitsposition 54 in Figur 6 übergeführt. Vorteilhafterweise sind die stirnseitigen Enden der Schutzleiste 51 nach oben gerichtet bzw. die stirnseitigen Enden bilden eine Auflageebene. Diese Arbeitsposition 54 wird eingenommen, nachdem mittels dem Abfragesensor 26 eine in Richtung auf die Sprüheinrichtung 21 zubewegte Stirnkante des plattenförmigen Werkstücks 2 erkannt wird. Die Hubbewegung der Schutzleisten 51 erfolgt ebenfalls nur bis zu einer variablen Höhe, welche abhängig von der Blechdicke ist und mit einem zusätzlichen Sensor oder durch den äußersten Rollentaster 61 bestimmt wird. Darauffolgend wird die Verfahrbewegung der Handlingseinrichtung 11 fortgesetzt. Bei einem plattenförmigen Werkstück 2, dessen Breite sich nicht vollständig entlang der Länge der Sprüheinrichtung 21 erstreckt, wird nur ein Teil der Sensoren 61 betätigt. In Figur 6 ist ein Sensor 61 dargestellt, der nicht betätigt oder beaufschlagt ist, da das plattenförmige Werkstück 2 sich nicht über die gesamte Breite erstreckt.

Nach dem Auswerten der Anzahl der bestätigten Sensoren 61 wird die Handlingseinrichtung 11 weiter in Richtung Rüststation 12 verfahren. Das plattenförmige Werkstück 2 liegt vorzugsweise an den Schutzleisten 51 an. Die Sprühköpfe 35 werden über die Abschaltventile 47 angesteuert, so dass Trennmittel durch die Auslassöffnung 34 der Sprühköpfe 35 auf die Unterseite des plattenförmigen Werkstücks 2 aufgesprüht wird. Durch die Anlage des plattenförmigen Werkstücks 2 an den Schutzleisten 51 wird ein geschlossener Sprühraum gebildet. Dadurch wird eine Vernebelung der Umgebung verhindert.

Die Handlingseinrichtung 11 wird weiterhin in Richtung auf die Rüstposition 12 verfahren. Sobald der Abfragesensor 26 kein plattenförmiges Werkstück 2 erfasst, werden die Abschaltventile 47 geschlossen. Es können auch die Abschaltventile 47 nach einer kurzen Zeitverzögerung erst abgeschalten werden, wobei jedoch sichergestellt ist, dass die Abschaltventile 47 geschlossen sind, bevor das hintere Ende des plattenförmigen Werkstücks 2 in Verfahrrichtung gesehen die letzte Schutzleiste 51 verlassen hat. Darauffolgend werden die Stellantriebe 28 angesteuert, um die Sprüheinrichtung 21 in die Ruheposition 36 gemäß Figur 4 überzuführen.

## Patentansprüche

1. Sprüheinrichtung zum Auftragen von einem Trennmittel auf zumindest ein plattenförmiges Werkstück (2),
- mit einer Tragstruktur (23),
- mit einem an der Tragstruktur (23) vorgesehenen leistenförmigen Grundkörper (31), entlang dessen Längsachse mehrere Sprühköpfe (35) mit zumindest einer Auslassöffnung im Abstand zueinander ausgerichtet und angeordnet sind, die an zumindest eine Förderleitung (48) zum Zuführen eines Trennmittels und zur Ausgabe des Trennmittels durch die Sprühköpfe (35) angeschlossen sind,
- wobei die Sprühköpfe (35) in vertikaler Richtung mit der zumindest einen Auslassöffnung nach oben weisend an dem leistenförmigen Grundkörper (31) ausgerichtet sind, so dass ein streifen- oder linienförmiger Auftrag des Trennmittels in einer im Wesentlichen vertikalen Richtung von unten nach oben auf einer Unterseite eines plattenförmigen Werkstücks (2) vorgesehen ist,
**dadurch gekennzeichnet,**
- **dass** der leistenförmige Grundkörper (31) in vertikaler Richtung durch eine Hubbewegung relativ zur Tragstruktur (23) zwischen einer unteren Ruheposition (36) und einer oberen Arbeitsposition (37) verfahrbar ist.

2. Sprüheinrichtung nach Anspruch 1, **dadurch gekennzeichnet, dass** an den leistenförmigen Grundkörper (31) zumindest eine Schutzleiste (51) vorgesehen ist, welche sich zumindest abschnittsweise entlang des leistenförmigen Grundkörpers (31) erstreckt und dass die zumindest eine Schutzleiste (51) in einer Ruheposition (36) des leistenförmigen Grundkörpers (31) eine Schutzposition (53) einnimmt und die Sprühköpfe (35) überdeckt und die zumindest eine Schutzleiste (51) in einer Arbeitsposition (37) des leistenförmigen Grundkörpers (31) eine Arbeitsposition (54) einnimmt, in der die Sprühköpfe (35) freigegeben sind.

3. Sprüheinrichtung nach Anspruch 2, **dadurch gekennzeichnet, dass** die zumindest eine Schutzleiste (51) durch eine Schwenk-, Schiebe- und/oder Verfahrbewegung durch eine mechanische, elektrische, pneumatische, hydraulische, linearmotorische Steuerungseinrichtung (44) in die Schutzposition (53) und die Arbeitsposition (54) überführbar ist und vorzugsweise die mechanische Steuerungseinrichtung (44) zwischen der Tragstruktur (23) und dem leistenförmigen Grundkörper (31) ausgebildet ist, wobei die mechanische Steuerungseinrichtung (44) an der Tragstruktur (43) ein Steuerelement (41) aufweist, welches mit zumindest einem Ansteuerelement (42) an dem leistenförmigen Grundkörper (31) gekoppelt ist und vorzugsweise das Steuerelement (41) eine Kurvenscheibe mit zumindest einem Längsschlitz (43) und das Ansteuerelement (42) durch einen Nocken in dem zumindest einen Längsschlitz (43) geführt ist.

4. Sprüheinrichtung nach einem der Ansprüche 2 oder 3, **dadurch gekennzeichnet, dass** beidseitig zu den entlang der Längsachse des leistenförmigen Grundkörpers (31) angeordneten Sprühköpfen (35) jeweils zumindest eine Schutzleiste (51) vorgesehen ist, die in entgegengesetzter Bewegungsrichtung aus der Schutzposition (53) in die Arbeitsposition (54) überführbar ist.

5. Sprüheinrichtung nach einem der Ansprüche 2 bis 4, **dadurch gekennzeichnet, dass** die Schutzleisten (51) als Bürstenleisten ausgebildet sind und die freien Borstenenden der Bürstenleiste in der Arbeitsposition (54) eine Auflageebene bilden und bei einem in der Auflageebene entlanggeführten plattenförmigen Werkstück (2) quer zur Längsachse des leistenförmigen Grundkörpers (31) ein geschlossener Sprühraum zum Auftragen des Trennmittels auf die Unterseite des plattenförmigen Werkstücks (2) bilden.

6. Sprüheinrichtung nach einem der vorhergehenden Ansprüche, **dadurch gekennzeichnet, dass** an zumindest einer Längsseite des leistenförmigen Grundkörpers (31) mehrere im Abstand zueinander angeordnete Sensoren (61) vorgesehen sind, durch welche eine Breite des plattenförmigen Werkstücks (2) vor dem Überfahren des leistenförmigen Grundkörpers (31) erfassbar ist und dass in Abhängigkeit der erfassten Breite des plattenförmigen Werkstücks (2) die Anzahl der Sprühköpfe (35) zur Ausgabe des Trennmittels ansteuerbar ist.

7. Sprüheinrichtung nach einem der vorhergehenden Ansprüche, **dadurch gekennzeichnet, dass** an jedem Sprühkopf (35) ein ansteuerbares Abschaltventil (47) vorgesehen ist.

8. Sprüheinrichtung nach einem der vorhergehenden Ansprüche, **dadurch gekennzeichnet, dass** der leistenförmige Grundkörper (31) durch zumindest einen Stellantrieb (28) zwischen der Ruheposition (36) und der Arbeitsposition (37) relativ zur Tragstruktur (23) verfahrbar ist.

9. Sprüheinrichtung nach einem der vorhergehenden Ansprüche, **dadurch gekennzeichnet, dass** der leistenförmige Grundkörper (31) im Querschnitt gesehen wannenförmig ausgebildet ist.

10. Werkstückwechsler zum Be- und Entladen einer Bearbeitungsmaschine (3),
- mit einer verfahrbaren Palette (4), welche eine Auflagefläche zur Aufnahme von zumindest einem plattenförmigen Werkstück (2) aufweist,
- mit einem Grundgestell (13), in welchem die zumindest eine verfahrbare Palette (17) in einer Rüstposition (12) anordenbar ist, wobei die Palette (17) zwischen der Rüstposition (12) in dem Grundgestell (13) und einer Bearbeitungsposition in der Bearbeitungsmaschine (3) verfahrbar ist,
- mit einer an dem Grundgestell (13) angeordneten Handlingseinrichtung (11), welche zwischen einer in oder benachbart zum Grundgestell (13) angeordneten Beladeposition (15) und der Rüstposition (12) verfahrbar ist, wobei die Handlingseinrichtung (11) aus der Beladeposition (15) zumindest ein plattenförmiges Werkstück (2) entnimmt und in die Rüstposition (12) zum Ablegen auf der Auflagefläche der Palette (17) überführt,
**dadurch gekennzeichnet,**
- **dass** zwischen der Beladeposition (15) und der Rüstposition (12) eine Sprüheinrichtung (21) nach einem der Ansprüche 1 bis 9 zum Auftragen von Trennmittel auf einer Unterseite des zumindest einen plattenförmigen Werkstücks (2) vorgesehen ist, welches oberhalb der Sprüheinrichtung (21) mit der Handlingseinrichtung (11) verfahrbar ist.

11. Werkstückwechsler nach Anspruch 10, **dadurch gekennzeichnet, dass** die Handlingseinrichtung (11) Sauggreifelemente (19) aufweist und das zumindest eine plattenförmige Werkstück (2) frei nach unten hängend oberhalb der Sprüheinrichtung (21) aus der Beladeposition (15) in die Rüstposition (12) überführt.

12. Verfahren zur Handhabung von zumindest einem plattenförmigen Werkstück (2) in einem Werkstückwechsler (10), der zum Be- und Entladen einer Bearbeitungsmaschine (3) mit zumindest einer Palette (4) vorgesehen ist,
- mit einem Grundgestell (13), in welchem die zumindest eine verfahrbare Palette (17), welche eine Auflagefläche zur Aufnahme von zumindest einem plattenförmigen Werkstück (2) aufweist, in einer Rüstposition (12) anordenbar ist, wobei die Palette (17) zwischen der Rüstposition (12) in dem Grundgestell (13) und einer Bearbeitungsposition in der Bearbeitungsmaschine (3) verfahrbar ist,
- mit einer an dem Grundgestell (13) angeordneten Handlingseinrichtung (11), welche zwischen einer in oder benachbart zum Grundgestell (13) angeordneten Beladeposition (15) und der Rüstposition (12) verfahrbar ist, wobei die Handlingseinrichtung (11) aus der Beladeposition (15) zumindest ein plattenförmiges Werkstück (2) entnimmt und in die Rüstposition (12) zum Ablegen auf der Auflagefläche der Palette (17) überführt,
**dadurch gekennzeichnet,**
- **dass** während einer Verfahrbewegung des plattenförmigen Werkstücks (2) von der Beladeposition (15) in die Rüstposition (12) durch eine zwischen der Beladeposition (15) und der Rüstposition (12) angeordneten Sprüheinrichtung (21) nach einem der Ansprüche 1 bis 9 ein Trennmittel auf eine Unterseite des zumindest einen plattenförmigen Werkstücks (2) aufgetragen wird.

13. Verfahren nach Anspruch 12, **dadurch gekennzeichnet, dass** die Handlingseinrichtung (11) nach dem Greifen des zumindest einen plattenförmigen Werkstücks (2) in Richtung auf die Rüstposition (12) verfahren wird und durch zumindest einen in Verfahrrichtung gesehen vor der Sprüheinrichtung (21) angeordneten Abfragesensor (26) eine in Verfahrrichtung vordere Kante des plattenförmigen Werkstücks (2) erfasst wird und darauffolgend die Verfahrbewegung der Handlingseinrichtung gestoppt und die Sprüheinrichtung (21) aus einer Ruheposition (36) in eine Arbeitsposition (37) verfahren wird und vorzugsweise mit dem Abfragesensor (26) das Ende des plattenförmigen Werkstücks (2) erfasst und darauffolgend die Sprühköpfe (35) abgeschalten und anschließend oder zeitverzögert die Sprühköpfe (35) der Sprüheinrichtung (31) aus der Arbeitsposition (37) in die Ruheposition (36) übergeführt werden.

14. Verfahren nach Anspruch 13, **dadurch gekennzeichnet, dass** in einem darauffolgenden Verfahrensschritt die Breite des zumindest einen plattenförmigen Werkstücks (2) durch an dem leistenförmigen Grundkörper (31) der Sprüheinrichtung (21) angeordneten Sensoren (61) erfasst und in Abhängigkeit der beaufschlagten Sensoren die entsprechende Anzahl von Sprühköpfen (35) der Sprüheinrichtung (21) angesteuert und das zumindest eine plattenförmige Werkstück (2) über die Sprüheinrichtung (21) hinweg und in die Rüstposition (12) übergeführt.

15. Verfahren nach einem der Ansprüche 12 bis 14, **dadurch gekennzeichnet, dass** das zumindest eine plattenförmige Werkstück (2) während des Überquerens der Sprüheinrichtung (21) auf Schutzleisten (51) der Sprüheinrichtung (21) anliegend entlanggeführt wird, die mit dem aufliegenden plattenförmigen Werkstück (2) einen geschlossenen Sprühraum bilden.

## Claims

1. A spray device for applying a release agent to at least one plate-shaped workpiece (2),
- with a support structure (23),
- with a strip-shaped base body (31) provided on the support structure (23), a plurality of spray heads (35) with at least one outlet opening being aligned and arranged at a distance from one another along the longitudinal axis of the base body, the spray heads being connected to at least one conveyor line (48) for supplying a separating agent and for issuing the release agent through the spray heads (35),
- wherein the spray heads (35) on the strip-shaped base body (31) are oriented in the vertical direction with the at least one outlet opening pointing upwards, thereby providing a strip-like or linear application of the release agent in a substantially vertical direction from bottom upward on an underside of a plate-shaped workpiece (2),
**characterized in that**
- the strip-shaped base body (31) can be displaced in the vertical direction by a lifting movement relative to the support structure (23) between a lower rest position (36) and an upper working position (37).

2. The spray device according to claim 1, **characterized in that** at least one protective strip (51) is provided on the strip-shaped base body (31), the protective strip extending at least in sections along the strip-shaped base body (31), and that the at least one protective strip (51), in a rest position (36) of the strip-shaped base body (31), assumes a protective position (53) and covers the spray heads (35), and, in a working position (37) of the strip-shaped base body (31), the at least one protective strip (51) assumes a working position (54) in which the spray heads (35) are released.

3. The spray device according to claim 2, **characterized in that** the at least one protective strip (51) can be transitioned to the protective position (53) and the working position (54) by a pivoting, pushing and/or displacement movement by a mechanical, electrical, pneumatic, hydraulic, linear-motor-driven control device (44) and that preferably the mechanical control device (44) is designed between the support structure (23) and the strip-shaped base body (31), wherein the mechanical control device (44) has a control element (41) on the support structure (43), the control element being coupled to at least one control element (42) on the strip-shaped base body (31), and preferably that the control element (41) is a cam disk with at least one longitudinal slot (43), and the control element (42) is guided in the at least one longitudinal slot (43) by a cam.

4. The spray device according to any one of claims 2 or 3, **characterized in that** on both sides of the spray heads (35), which are arranged along the longitudinal axis of the strip-shaped base body (31), at least one protective strip (51) is provided in each case, the strip able to be transitioned from the protective position (53) to the working position (54) in the opposite direction of movement.

5. The spray device according to any one of claims 2 to 4, **characterized in that** the protective strips (51) are designed as brush strips, and the free bristle ends of the brush strip form a support plane in the working position (54), and in the case of a plate-shaped workpiece (2) guided along the support plane lateral to the longitudinal axis of the strip-shaped base body (31) they form a closed spray chamber for applying the separating agent to the underside of the plate-shaped workpiece (2).

6. The spray device according to any one of the preceding claims, **characterized in that** on at least one longitudinal side of the strip-shaped base body (31) there are provided a plurality of sensors (61) which are arranged at a distance from one another and by means of which a width of the plate-shaped workpiece (2) can be detected before the strip-shaped base body (31) can be passed over, and that the number of spray heads (35) for issuing the release agent can be controlled as a function of the detected width of the plate-shaped workpiece (2).

7. The spray device according to any one of the preceding claims, **characterized in that** a controllable shut-off valve (47) is provided on each spray head (35).

8. The spray device according to any one of the preceding claims, **characterized in that** the strip-shaped base body (31) can be displaced by at least one actuator (28) between the rest position (36) and the working position (37) relative to the support structure (23).

9. The spray device according to any one of the preceding claims, **characterized in that** the strip-shaped base body (31) is trough-shaped when viewed in cross-section.

10. A workpiece changer for loading and unloading a processing machine (3),
- with a displaceable pallet (4), which has a support surface for receiving at least one plate-shaped workpiece (2),
- with a base frame (13), in which the at least one displaceable pallet (17) can be arranged in a set-up position (12), wherein the pallet (17) is displaceable between the set-up position (12) in the base frame (13) and a processing position in the processing machine (3),
- with a handling device (11) arranged on the base frame (13), the handling device being displaceable between a loading position (15) arranged in or adjacent to the base frame (13) and the set-up position (12), wherein the handling device (11) removes at least one plate-shaped workpiece (2) from the loading position (15) and transitions it to the set-up position (12) for placement on the support surface of the pallet (17),
**characterized in that**
- between the loading position (15) and the set-up position (12), a spray device (21) according to any one of claims 1 to 9 is provided for applying release agent on an underside of the at least one plate-shaped workpiece (2) which is displaceable with the handling device (11) above the spray device (21).

11. The workpiece changer according to claim 10, **characterized in that** the handling device (11) has suction gripping elements (19) and the at least one plate-shaped workpiece (2), which hangs freely downwards above the spray device (21), transitions from the loading position (15) to the set-up position (12).

12. A method for handling at least one plate-shaped workpiece (2) in a workpiece changer (10) which is provided for loading and unloading a processing machine (3) with at least one pallet (4),
- with a base frame (13) in which the at least one displaceable pallet (17), which has a support surface for receiving at least one plate-shaped workpiece (2), can be arranged in a set-up position (12), wherein the pallet (17) can be displaced between the set-up position (12) in the base frame (13) and a processing position in the processing machine (3),
- with a handling device (11) arranged on the base frame (13), the handling device being displaceable between a loading position (15) arranged in or adjacent to the base frame (13) and the set-up position (12), wherein the handling device (11) removes at least one plate-shaped workpiece (2) from the loading position (15) and transitions it to the set-up position (12) for placement on the support surface of the pallet (17),
**characterized in that**,
- during a displacement movement of the plate-shaped workpiece (2) from the loading position (15) to the set-up position (12), a separating agent is applied to an underside of the at least one plate-shaped workpiece (2) by a spray device (21) according to one of claims 1 to 9 arranged between the loading position (15) and the set-up position (12).

13. The method according to claim 12, **characterized in that** the handling device (11) is displaced in the direction of the set-up position (12) after gripping the at least one plate-shaped workpiece (2), and an edge of the plate-shaped workpiece (2) that is at the front, in the direction of travel, is detected by at least one query sensor (26) arranged in front of the spray device (21), as viewed in the direction of travel, is detected and the travel movement of the handling device is then stopped and the spray device (21) is displaced from a rest position (36) to a working position (37) and the end of the plate-shaped workpiece (2) is detected, preferably with the query sensor (26), and subsequently the spray heads (35) are switched off and then, or with a time delay, the spray heads (35) of the spray device (31) are transitioned from the working position (37) to the rest position (36).

14. The method according to claim 13, **characterized in that** in a subsequent method step the width of the at least one plate-shaped workpiece (2) is detected by sensors (61) arranged on the strip-shaped base body (31) of the spray device (21) and, depending on the sensors acted upon, the corresponding number of spray heads (35) of the spray device (21) is controlled and the at least one plate-shaped workpiece (2) is transitioned past the spray device (21) and to the set-up position (12).

15. The method according to any one of claims 12 to 14, **characterized in that** while the spray device (21) is being traversed, the at least one plate-shaped workpiece (2) is guided along and adjacent to the spray device (21) on protective strips (51) which form a closed spray space together with the plate-shaped workpiece (2).

## Revendications

1. Dispositif de pulvérisation destiné à l'application d'un agent de séparation sur au moins une pièce en forme de plaque (2),
- avec une structure porteuse (23),
- avec un corps de base en forme de baguette (31) prévu sur la structure porteuse (23), le long de l'axe longitudinal duquel plusieurs têtes de pulvérisation (35) comportant au moins un orifice de sortie sont orientées et disposées à distance les unes des autres, lesquelles sont raccordées à au moins une conduite d'alimentation (48) pour l'alimentation d'un agent de séparation et pour la délivrance de l'agent de séparation par les têtes de pulvérisation (35),
- dans lequel les têtes de pulvérisation (35) sont orientées sur le corps de base en forme de baguette (31) dans une direction verticale avec ledit au moins un orifice de sortie orienté vers le haut, de sorte qu'une application de l'agent de séparation en forme de bande ou de ligne est prévue dans une direction essentiellement verticale de bas en haut sur une face inférieure d'une pièce en forme de plaque (2),
**caractérisé en ce que**,
- le corps de base en forme de baguette (31) est déplaçable dans une direction verticale par un mouvement de levage par rapport à la structure porteuse (23) entre une position de repos (36) inférieure et une position de travail (37) supérieure.

2. Dispositif de pulvérisation selon la revendication 1, **caractérisé en ce qu'**au moins une baguette de protection (51) est prévue sur le corps de base en forme de baguette (31), laquelle s'étend au moins par sections le long du corps de base en forme de baguette (31) et **en ce que** ladite au moins une baguette de protection (51) adopte une position de protection (53) dans une position de repos (36) du corps de base en forme de baguette (31) et recouvre les têtes de pulvérisation (35), et ladite au moins une baguette de protection (51) adopte une position de travail (54) dans une position de travail (37) du corps de base en forme de baguette (31), dans laquelle les têtes de pulvérisation (35) sont dégagées.

3. Dispositif de pulvérisation selon la revendication 2, **caractérisé en ce que** ladite au moins une baguette de protection (51) est transférable dans la position de protection (53) et la position de travail (54) par un mouvement de pivotement, de coulissement et/ou de déplacement par un dispositif de commande mécanique (44), électrique, pneumatique, hydraulique ou à moteur linéaire et de préférence le dispositif de commande mécanique (44) est formé entre la structure porteuse (23) et le corps de base en forme de baguette (31), dans lequel le dispositif de commande mécanique (44) comporte sur la structure porteuse (43) un élément de commande (41), lequel est couplé à au moins un élément d'actionnement (42) sur le corps de base en forme de baguette (31), et de préférence l'élément de commande (41) est un disque à rainure courbe comportant au moins une fente longitudinale (43) et l'élément d'actionnement (42) est guidé par un pion de guidage dans ladite au moins une fente longitudinale (43).

4. Dispositif de pulvérisation selon l'une des revendications 2 ou 3, **caractérisé en ce que** de chaque côté des têtes de pulvérisation (35) disposées le long de l'axe longitudinal du corps de base en forme de baguette (31), au moins une baguette de protection (51) est respectivement prévue, laquelle est transférable de la position de protection (53) vers la position de travail (54) dans une direction de mouvement opposée.

5. Dispositif de pulvérisation selon l'une des revendications 2 à 4, **caractérisé en ce que** les baguettes de protection (51) sont conçues sous forme de baguettes à brosses et les extrémités libres des poils de la baguette à brosses forment, dans la position de travail (54), un plan d'appui et, dans le cas d'une pièce en forme de plaque (2) guidée le long du plan d'appui transversalement à l'axe longitudinal du corps de base en forme de baguette (31), forment un espace de pulvérisation fermé pour l'application de l'agent de séparation sur la face inférieure de la pièce en forme de plaque (2).

6. Dispositif de pulvérisation selon l'une des revendications précédentes, **caractérisé en ce que** sur au moins un côté longitudinal du corps de base en forme de baguette (31), plusieurs capteurs (61) disposés à distance les uns des autres sont prévus, au moyen desquels une largeur de la pièce en forme de plaque (2) est détectable avant le franchissement du corps de base en forme de baguette (31) et **en ce qu'**en fonction de la largeur détectée de la pièce en forme de plaque (2), le nombre de têtes de pulvérisation (35) pour la délivrance de l'agent de séparation est commandable.

7. Dispositif de pulvérisation selon l'une des revendications précédentes, **caractérisé en ce qu'**une vanne d'arrêt (47) commandable est prévue sur chaque tête de pulvérisation (35).

8. Dispositif de pulvérisation selon l'une des revendications précédentes, **caractérisé en ce que** le corps de base en forme de baguette (31) est déplaçable entre la position de repos (36) et la position de travail (37) par rapport à la structure porteuse (23) par au moins un actionneur (28).

9. Dispositif de pulvérisation selon l'une des revendications précédentes, **caractérisé en ce que** le corps de base en forme de baguette (31) est conçu en forme de bac en section transversale.

10. Changeur de pièces destiné au chargement et au déchargement d'une machine d'usinage (3),
- avec une palette déplaçable (4), laquelle présente une surface d'appui destinée à recevoir au moins une pièce en forme de plaque (2),
- avec un bâti de base (13), au sein duquel ladite au moins une palette déplaçable (17) peut être disposée dans une position de préparation (12), dans lequel la palette (17) est déplaçable entre la position de préparation (12) dans le bâti de base (13) et une position d'usinage dans la machine d'usinage (3),
- avec un dispositif de manipulation (11) disposé sur le bâti de base (13), lequel est déplaçable entre une position de chargement (15) disposée dans ou adjacente au bâti de base (13) et la position de préparation (12), dans lequel le dispositif de manipulation (11) prélève au moins une pièce en forme de plaque (2) depuis la position de chargement (15) et la transfère dans la position de préparation (12) pour un dépôt sur la surface d'appui de la palette (17),
**caractérisé en ce que**,
- entre la position de chargement (15) et la position de préparation (12), un dispositif de pulvérisation (21) selon l'une des revendications 1 à 9 est prévu pour l'application d'un agent de séparation sur une face inférieure de ladite au moins une pièce en forme de plaque (2), laquelle est déplaçable au-dessus du dispositif de pulvérisation (21) avec le dispositif de manipulation (11).

11. Changeur de pièces selon la revendication 10, **caractérisé en ce que** le dispositif de manipulation (11) comporte des éléments de préhension par ventouse (19) et que ladite au moins une pièce en forme de plaque (2) est transférée depuis la position de chargement (15) vers la position de préparation (12) en étant suspendue librement vers le bas au-dessus du dispositif de pulvérisation (21).

12. Procédé de manipulation d'au moins une pièce en forme de plaque (2) dans un changeur de pièces (10), lequel est prévu pour le chargement et le déchargement d'une machine d'usinage (3) avec au moins une palette (4),
- avec un bâti de base (13), dans lequel ladite au moins une palette déplaçable (17), laquelle présente une surface d'appui destinée à recevoir au moins une pièce en forme de plaque (2), peut être disposée dans une position de préparation (12), dans lequel la palette (17) est déplaçable entre la position de préparation (12) dans le bâti de base (13) et une position d'usinage dans la machine d'usinage (3),
- avec un dispositif de manipulation (11) disposé sur le bâti de base (13), lequel est déplaçable entre une position de chargement (15) disposée dans le bâti de base (13) ou adjacente à celui-ci et la position de préparation (12), dans lequel le dispositif de manipulation (11) prélève au moins une pièce en forme de plaque (2) depuis la position de chargement (15) et la transfère dans la position de préparation (12) pour un dépôt sur la surface d'appui de la palette (17),
**caractérisé en ce que**,
- pendant un mouvement de déplacement de la pièce en forme de plaque (2) depuis la position de chargement (15) vers la position de préparation (12), un agent de séparation est appliqué sur une face inférieure de ladite au moins une pièce en forme de plaque (2) par un dispositif de pulvérisation (21) disposé entre la position de chargement (15) et la position de préparation (12) selon l'une des revendications 1 à 9.

13. Procédé selon la revendication 12, **caractérisé en ce que** le dispositif de manipulation (11), après la préhension de ladite au moins une pièce en forme de plaque (2), est déplacé en direction de la position de préparation (12) et qu'au moyen d'un capteur de vérification (26) disposé dans la direction de déplacement, en amont du dispositif de pulvérisation (21), un bord avant de la pièce en forme de plaque (2) dans la direction de déplacement est détecté et ensuite le mouvement de déplacement du dispositif de manipulation est arrêté et le dispositif de pulvérisation (21) est déplacé d'une position de repos (36) vers une position de travail (37) et, de préférence, l'extrémité de la pièce en forme de plaque (2) est détectée avec le capteur de vérification (26) et ensuite les têtes de pulvérisation (35) sont désactivées et ultérieurement ou avec un retard temporel les têtes de pulvérisation (35) du dispositif de pulvérisation (31) sont transférées de la position de travail (37) vers la position de repos (36).

14. Procédé selon la revendication 13, **caractérisé en ce que**, dans une étape de procédé suivante, la largeur de ladite au moins une pièce en forme de plaque (2) est détectée par des capteurs (61) disposés sur le corps de base en forme de baguette (31) du dispositif de pulvérisation (21) et, en fonction des capteurs sollicités, le nombre correspondant de têtes de pulvérisation (35) du dispositif de pulvérisation (21) est commandé et ladite au moins une pièce en forme de plaque (2) est transférée au-delà du dispositif de pulvérisation (21) et dans la position de préparation (12).

15. Procédé selon l'une des revendications 12 à 14, **caractérisé en ce que** ladite au moins une pièce en forme de plaque (2), pendant la traversée du dispositif de pulvérisation (21), est guidée le long en étant en appui sur des baguettes de protection (51) du dispositif de pulvérisation (21), lesquelles forment avec la pièce en forme de plaque (2) en appui un espace de pulvérisation fermé.
